# FASCICULE DE BREVET EUROPEEN

(11) **EP 3 459 349 B1**
(45) Date de publication et mention de la délivrance du brevet: **10.04.2024**
(21) Numéro de dépôt: 18194190.7
(22) Date de dépôt: 13.09.2018
(51) Int. Cl.: A01K 5/00

(54) **MACHINE AGRICOLE POUR LE TRANSPORT ET LA DISTRIBUTION DE PRODUITS EN VRAC**
LANDWIRTSCHAFTLICHE MASCHINE FÜR DEN TRANSPORT UND DIE VERTEILUNG VON LOSEN PRODUKTEN
AGRICULTURAL MACHINE FOR THE TRANSPORT AND DISTRIBUTION OF BULK PRODUCTS

(30) Priorité: 20.09.2017 FR 1758685
(43) Date de publication de la demande: 27.03.2019
(73) Titulaire: Kuhn-Audureau SAS, 85260 La Copechagnière (FR)
(72) Inventeur: MIGNON, Florent, 85250 Saint-André-Goule-d'Oie (FR); SORIN, Benoît, 44116 Vieillevigne (FR)
(74) Mandataire: Cabinet Nuss

(56) Documents cités:
- GB-A- 2 310 793
- US-A- 5 647 665
- US-A1- 2007 274 151

## Description

La présente invention concerne le domaine du machinisme agricole, plus particulièrement les engins mobiles de distribution de produits en vrac pour l'alimentation des animaux, et a pour objet une machine agricole pour le transport et la distribution de tels produits.

Plus spécifiquement, l'invention concerne une machine agricole, automotrice ou sous forme de remorque à atteler, pour le transport et la distribution de produits en vrac, notamment destinés à l'alimentation animalière. Une telle machine comprend une cuve, ou un réceptacle analogue, qui est montée sur un châssis roulant, qui comporte au moins une ouverture obturable et située sensiblement à proximité ou au niveau du fond de la cuve et qui est équipée d'au moins un organe mobile effectuant le raclage dudit fond et favorisant l'éjection du produit à travers ladite au moins une ouverture.

De nombreuses réalisations de machines agricoles de ce type sont déjà connues dans l'état de la technique.

Dans un premier type de machines connu, sous forme de remorques distributrices, un tapis convoyeur comprenant des barrettes transversales mobiles, entraînées par des chaînes latérales, racle le fond de la cuve et transporte le produit contenu dans cette dernière vers une ouverture de déchargement située à l'avant. Toutefois, dans ce type de remorques, tout le produit présent la cuve est transporté (nécessitant un dimensionnement adéquat des chaînes, des barrettes et du moyen d'entraînement), et une partie du produit est emmenée sous les barrettes par le tapis. De plus, une aération ou une désagrégation du produit compacté durant le transport est nécessaire (nécessité d'un démêleur au niveau de l'ouverture de sortie) et le produit doit être réparti sur toute la longueur de la cuve lors du chargement.

On connaît également des machines du type mélangeuse distributrice, telles que par exemple celles des gammes PROFILE ou EUROMIX de la demanderesse, lesquelles comportent au moins une vis mélangeuse verticale. Une telle vis rotative hélicoïdale, d'un seul tenant ou segmentée, et s'effilant vers le haut, réalise une pluralité de fonctions, à savoir : mélange et aération du produit, répartition du produit dans la cuve, raclage du fond de la cuve et éjection du produit lors de la distribution (ouverture(s) de déchargement ouverte(s)). Avec une telle vis rotative hélicoïdale, la distribution n'est pas très homogène puisque seul le produit en avant de la vis rotative hélicoïdale est éjecté au travers de l'ouverture et que le restant du produit est entrainé vers le haut par la vis. De manière générale, la(les) vis rotative(s) hélicoïdale(s) présente(nt) une hauteur supérieure à la hauteur de l'ouverture de déchargement. Cette grande hauteur permet d'assurer un mélange homogène dans la cuve puisque le produit positionné au fond de la cuve est entrainé vers le haut grâce à la vis hélicoïdale.

Une telle mélangeuse distributrice nécessite par l'entraînement des vis multifonction une puissance importante, même lorsque seulement la fonction distribution est requise (les autres fonctions sont systématiquement réalisées simultanément).

De plus, lors de la rotation d'une telle vis de mélange, de raclage et d'éjection, le produit est déplacé vers le haut, ce qui réduit l'efficacité en termes de déchargement.

Le document US2007/274151A1 a pour objet une machine agricole, plus particulièrement une mélangeuse à vis verticale, comprenant des organes combinés de mélange, de raclage et d'éjection montés sur un axe porteur unique qui nécessitent une puissance importante. Les moyens de raclage et d'éjection sont distincts.

Le but principal de la présente invention est de surmonter les inconvénients et limitations exposés ci-dessus, et notamment de fournir une machine agricole du type visé en introduction dans laquelle le déchargement et la distribution du produit sont plus efficients, permettant de réaliser une distribution homogène de grandes quantités de produit, ce avec une consommation d'énergie et une puissance nécessaires réduites.

Ce but est atteint avec une machine agricole selon la présente invention telle que définie dans la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues respectivement de dessus (fig. 1A) et en coupe selon son axe médian longitudinal (fig. 1B), d'une remorque distributrice selon un premier mode de réalisation de l'invention ;
la figure 1C est une vue partiellement en coupe similaire à la figure 1B d'une variante de réalisation de la remorque de la figure 1A ;
la figure 2 est une vue de dessus d'une cuve d'une machine agricole selon un second mode de réalisation de l'invention ;
les figures 3 et 4 sont des vues de détail, à une échelle différente, respectivement en perspective (fig. 3) et en élévation latérale (fig. 4), d'un bras d'un organe mobile rotatif de raclage et d'éjection faisant partie d'une machine agricole telle que représentée aux figures 1 , vue à travers une ouverture latérale de déchargement et de distribution ménagée dans la cuve, et,
la figure 5 est une vue de dessus d'une remorque distributrice à fond circulaire, munie d'un unique organe mobile de raclage et d'éjection.

Les figures, 2 et 5, illustrent une machine agricole 1, sous forme de remorque à atteler, pour le transport et la distribution de produits en vrac, notamment destinés à l'alimentation animalière.

Cette machine 1 comprend une cuve, ou un réceptacle analogue 2, qui est montée sur un châssis roulant 3, qui comporte au moins une ouverture 4 obturable (par une porte coulissante ou pivotante 5 par exemple) et située sensiblement à proximité ou au niveau du fond 2' de la cuve 2 et qui est équipée d'au moins un organe mobile 6, 6' effectuant le raclage dudit fond 2' et favorisant l'éjection du produit à travers ladite au moins une ouverture 4. La ou chaque ouverture 4 peut être positionnée latéralement, à l'avant ou à l'arrière de la cuve 2, par rapport à la direction de déplacement normale (direction d'avance A) de la machine 1.

Comme le montrent les figures, cette ou ces ouverture(s) 4 est (sont) ménagée(s) dans la paroi latérale de la cuvée 2 et s'étendent jusqu'au niveau du fond 2'.

Conformément à l'invention, l'organe ou chaque organe mobile 6, 6' de raclage et d'éjection est un organe monté rotatif autour d'un arbre ou axe vertical 7, perpendiculaire par rapport au plan du fond 2' et comprenant au moins deux bras radiaux 8, 8', 8", 8'" séparés, répartis autour de l'axe 7 et balayant, le cas échéant en coopération avec les bras 8, 8', 8", 8‴ d'au moins un autre organe 6, 6', sensiblement la totalité de la surface du fond 2', l'épaisseur ou la hauteur h par rapport au fond 2' de chaque bras 8, 8', 8", 8‴ étant inférieure à la hauteur h' de l'ouverture 4 ou de chaque ouverture 4 latérale s'étendant depuis le fond 2' et devant laquelle ou lesquelles passe le bras 8, 8', 8", 8'" considéré lors de la rotation de l'organe mobile 6, 6' concerné.

Il s'agit de considérer la hauteur h d'un des bras de l'organe mobile 6, 6' qui est associé au moins partiellement à l'ouverture 4 de distribution de la cuve 2. D'une manière avantageuse, les différents bras 8, 8', 8", 8‴ montés sur un même organe mobile 6, 6' sont identiques. Selon une alternative non représentée, les bras peuvent être de forme et de géométrie différentes. Ainsi l'un des bras peut présenter une longueur plus courte qu'un autre bras et/ou une hauteur différente. Dans la comparaison de hauteur entre la porte 4 et les bras 8, 8', 8", 8‴, il y a lieu de choisir le bras qui dispose d'une hauteur réduite par rapport aux autres bras (en cas de hauteurs de bras différentes).

Grâce à l'invention, on peut ainsi décharger de manière aisément contrôlable, efficacement et jusqu'à vidage complet, la cuve 2, ce tout en ne nécessitant qu'une puissance limitée.

En effet, en prévoyant des moyens de raclage et d'éjections à structure discontinue (bras 8, 8', 8", 8‴ distincts, séparés et mutuellement espacés) et présentant chacun une hauteur limitée, la quantité de matière impactée et déplacée lors du mouvement rotatif de chaque organe 6, 6' est limitée, ne nécessitant de ce fait qu'un couple rotatoire de valeur limitée. De plus, le soulèvement des produits en vrac lors du déplacement des organes 6, 6' n'est que fugace et temporaire, en étant restreint au seul volume vertical étroit situé au droit du bras considéré et cantonné seulement à un instant donné (lorsque ledit bras est situé sous ledit volume).

Par conséquent, la zone d'interaction entre les organes 6, 6' et le ou les produit(s) en vrac se limite à la hauteur de l'ouverture d'évacuation et plus précisément à un volume discoïdal de faible épaisseur situé au fond 2' de la cuve 2. En outre, aucune action globale de soulèvement de produits, ni d'ailleurs de mélange volumique, n'est recherchée par les organes de raclage et d'éjection 6, 6', contrairement aux vis rotatives hélicoïdales mises en oeuvre dans les machines de l'état de la technique, enroulées autour d'axes 7 et s'étendant vers le haut dans la cuve, sur une hauteur nettement supérieure à celle de l'ouverture d'évacuation concernée. En s'affranchissant selon l'invention d'une telle vis mélangeuse, à structure continue et entraînant de manière permanente les produits en vrac vers le haut, la puissance nécessaire pour entraîner le ou chaque axe 7 est réduite et une vitesse de rotation plus élevée des organes 6, 6' est possible, permettant un déchargement et une distribution plus rapides desdits produits.

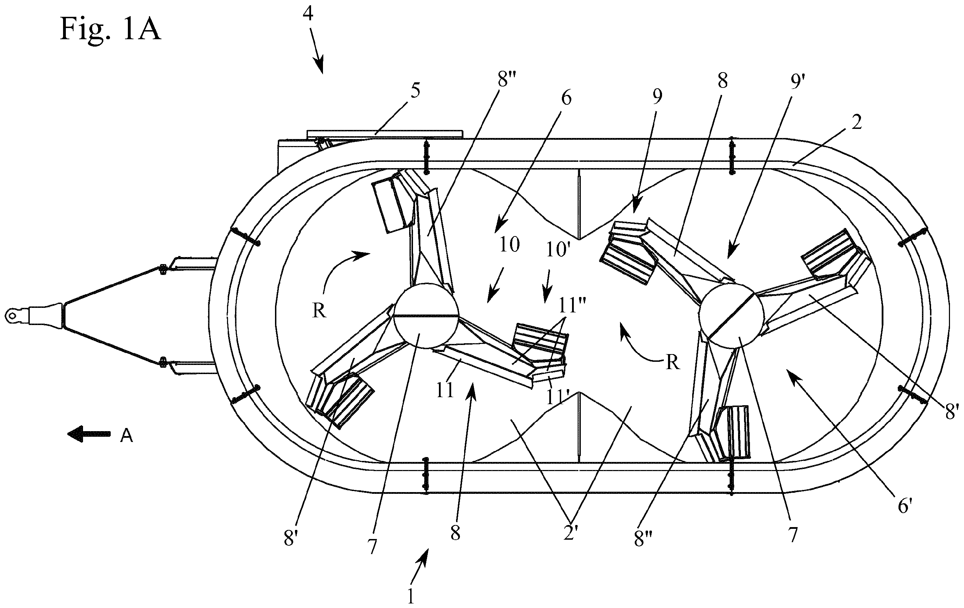

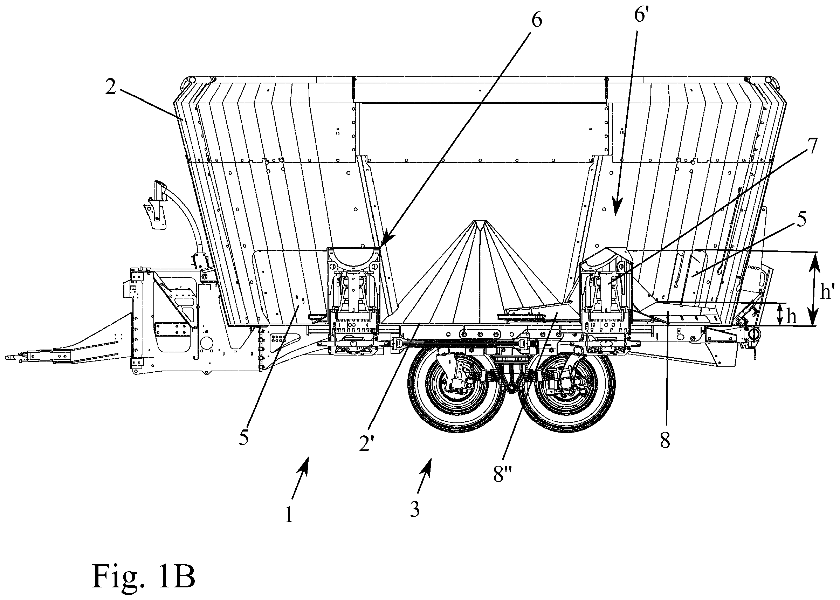

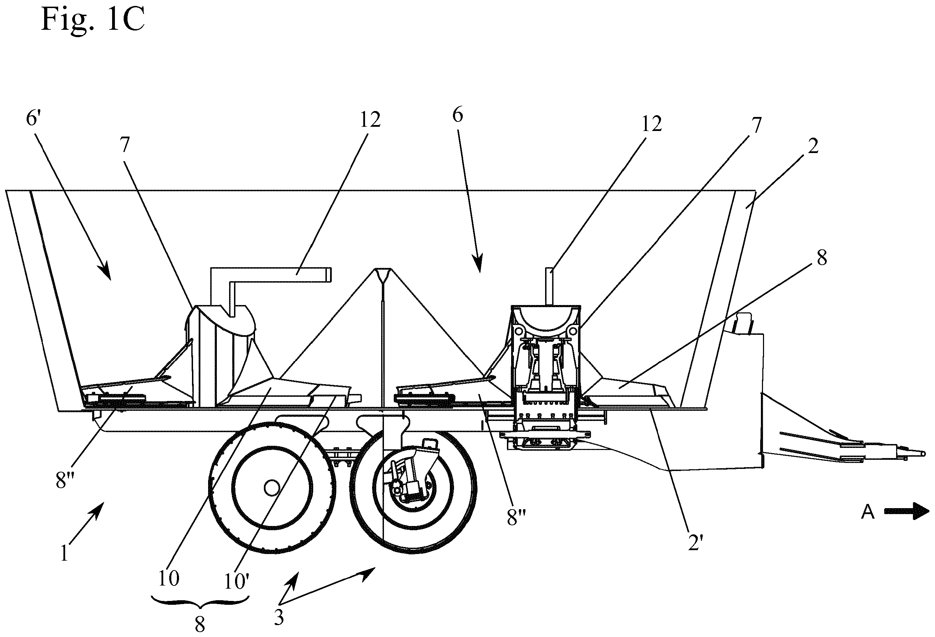

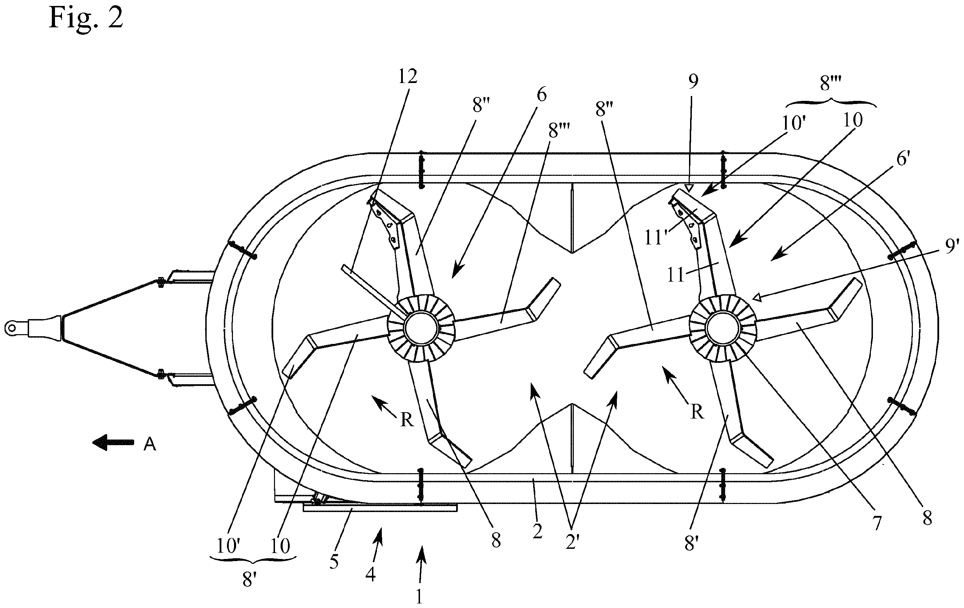

Dans l'exemple de réalisation représenté sur les figures 1 et 2, il s'agit d'une machine agricole à double organe mobile de raclage et d'éjection 6 et 6' avec une seule ouverture 4 latérale associée à l'organe mobile 6 avant, compte tenu de la direction d'avance A. Le sens de rotation du premier organe mobile 6 se fait de manière à éjecter par l'ouverture 4 située à l'avant du côté droit (figure 1A) ou du côté gauche (figure 2) de la cuve 2 (selon la direction A). La rotation des deux organes mobiles 6 et 6' se fait dans le même sens. Et le second organe 6' alimente alors le premier organe en produit provenant de l'arrière de la cuve 2. Selon une alternative, il est envisageable que les deux organes mobiles 6 et 6' tournent en sens inverses. Une telle configuration permet d'optimiser le sens de rotation de l'organe mobile pour une meilleure distribution associée à la porte.

Dans une solution avantageuse, l'un 6' des organes mobiles 6, 6' est entrainé en rotation après l'autre 6 dans le but de réduire la puissance au démarrage, ce grâce à un dispositif de débrayage. Le deuxième organe mobile peut par exemple être entraîné après qu'une partie du produit à distribuer a déjà été distribué par le premier organe mobile 6.

Dans une autre solution non représentée, l'entraînement de chacun des organes 6, 6' est réalisé au moyen d'un moteur électrique ou d'un moyen hydraulique, préférentiellement propre.

Le raclage du fond 2' de la cuve 2 est effectué par plusieurs organes mobiles pouvant être disposé soit l'un derrière l'autre comme représenté sur les figures 1A, 1C et 2, soit côte à côte. Dans ce cas, le diamètre des organes mobiles 6, 6' est réduit et la géométrie du fond 2' de la cuve 2 est adaptée en conséquence. Un organe mobile additionnel peut également être disposé à l'arrière de deux organes mobiles 6 et 6' arrangés côte à côte.

Du fait de l'absence de jonction et donc de continuité, entre bras radiaux 8, 8', 8", 8‴ successifs dans l'arrangement autour de l'arbre 7, le produit tombe ou retombe sur le fond 2' de la cuve 2 après le passage de chaque bras et n'est donc pas déplacé vers le haut de la cuve 2.

L'homme du métier comprend que le fond 2' de la cuve 2 présente une conformation circulaire ou est formé de zones circulaires adjacentes et partiellement chevauchantes, l'axe de l'arbre 7 associé à la zone de fond considérée passant par le centre du cercle périphérique de cette dernière et les bras radiaux 8, 8', 8", 8‴ de l'organe 6, 6' associé étant dimensionnés pour balayer la totalité de ladite zone lors de leur déplacement.

Suite à différents essais pratiques, les inventeurs ont constaté que le meilleur compromis entre complexité de construction et efficacité de déchargement consistait à prévoir que chaque organe mobile 6, 6' comporte au moins trois, préférentiellement quatre, bras allongés 8, 8', 8", 8"', mutuellement séparés et indépendants, et répartis de manière équidistante angulairement autour de l'axe ou de l'arbre 7 dudit organe 6, 6'.

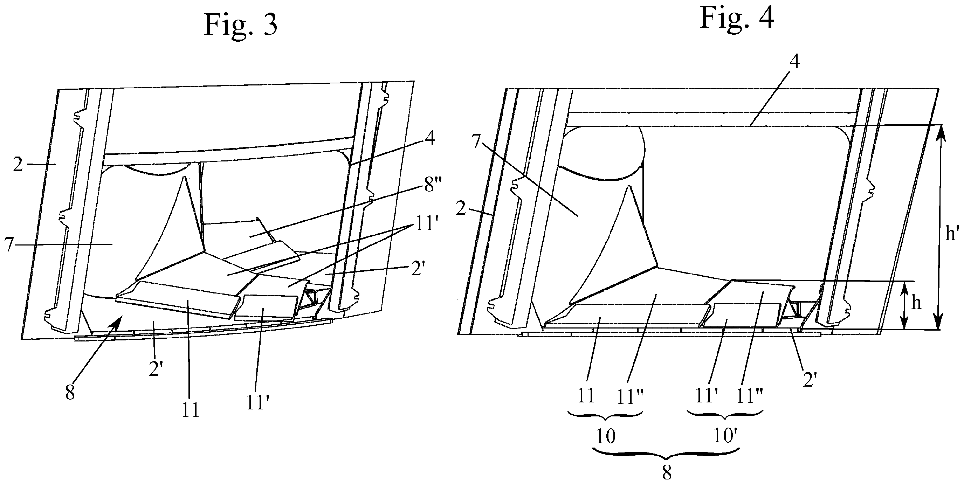

En accord avec une caractéristique constructive de l'invention, ressortant notamment de la figure 3A et des figures 1A et 2, chaque bras 8, 8', 8", 8‴ est configuré et dimensionné de telle manière qu'il passe, avec son extrémité distale 9, à proximité immédiate d'au moins une ouverture latérale 4 de la cuve 2 lors de la rotation de l'organe mobile de raclage et d'éjection 6, 6' auquel appartient ledit bras 8, 8', 8", 8‴.

Afin de favoriser le mouvement d'éjection radiale centrifuge lors du déplacement en rotation de l'organe 6, 6' considéré, l'invention prévoit favorablement que chaque bras 8, 8', 8", 8‴ comporte deux segments longitudinaux contigus 10 et 10', à savoir, un segment principal interne 10, de plus grande longueur, relié à l'arbre 7 et s'étendant radialement depuis ce dernier, et un segment secondaire externe 10' de plus faible longueur, s'étendant dans le prolongement du segment principal 10 et incliné vers l'arrière, lorsqu'il est vu dans le sens de rotation R de l'organe mobile 6, 6' en fonctionnement normal, par rapport audit segment principal 10 (figures 1A, 2 et 3A).

Avantageusement, la face latérale de chaque bras 8, 8', 8", 8‴, qui est située du côté frontal lors de la rotation de l'organe mobile 6, 6' considéré, est pourvue d'au moins un élément de raclage 11, 11', préférentiellement monté de manière aisément interchangeable, en tant que pièce d'usure.

En outre, chacun des deux segments 10 et 10' longitudinaux de chaque bras 8, 8', 8", 8'" peut comporter son propre élément de raclage 11 ou 11'.

Comme cela ressort des figures 3 et 4 notamment, ces éléments de raclage 11, 11' peuvent être montés à l'avant et en bas de plaques de déflection 11" avec lesquelles ils forment des biseaux. L'ensemble de ces pièces 11, 11', 11" inclinées de décollement, de soulèvement et de poussée du produit contenu dans la cuve 2 est par exemple fixé sur une barre radiale rigide, segmentée ou non, solidaire de l'arbre 7 de l'organe mobile considéré 6, 6'.

En vue de limiter le coût de revient et d'optimiser le raclage et l'éjection, il est prévu que chaque bras 8, 8', 8", 8'" présente une section décroissante, continûment ou par paliers, depuis son extrémité 9' proximale de l'arbre 7, et raccordée à ce dernier, jusqu'à son extrémité distale libre 9.

La hauteur h d'un bras décroît selon la direction centrifuge, sa valeur étant néanmoins toujours inférieure à la hauteur h' de l'ouverture 4 associée, au moins dans sa région extrêmale. Avantageusement, tous les bras présentent sur la majorité de leur extension une hauteur h inférieure à la hauteur h' de l'ouverture 4 (cf. figures 3 et 4).

Préférentiellement, pour optimiser le coût matière, tout en garantissant une rigidité suffisante, chaque bras 8, 8', 8", 8‴ présente une section transversale de forme triangulaire.

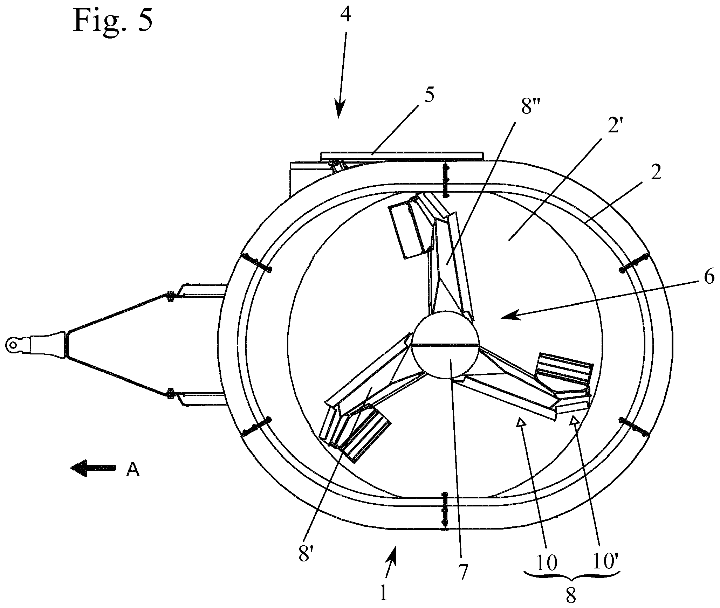

Comme déjà indiqué, la cuve 2 peut présenter au niveau du fond 2' soit une forme circulaire (figure 5), soit une forme oblongue ou ellipsoïdale (figures 1 et 2).

Dans le cadre de la première variante constructive (figure 5), la présence d'un unique organe mobile rotatif 6 est adapté, alors que dans le cadre de la seconde variante constructive (figures 1 et 2) au moins deux organes 6 et 6' alignés selon l'axe longitudinal de la cuve 2 et avec des surfaces de balayage partiellement chevauchantes ou non, sont préférentiellement prévus.

De plus, à chaque organe mobile 6, 6' peut être associée une unique ouverture 4. En variante, au moins deux ouvertures 4, situées sur des côtés différents de la cuve 2, peuvent être associées à chaque organe 6, 6'.

Lorsque, avant distribution, il est avantageux que le produit à distribuer subisse une opération d'aération, une désagrégation ou désagglomération et/ou une homogénéisation, l'invention peut en outre prévoir qu'au moins un élément agitateur 12 est associé à au moins un organe mobile 6, 6' et qu'avantageusement l'arbre 7 rotatif, faisant partie de l'un ou de chaque organe mobile 6, 6' et portant les bras radiaux 8, 8', 8", 8‴ de l'organe 6, 6' considéré, soit équipé d'au moins un élément agitateur supplémentaire 12. Un tel élément agitateur 12 est représenté sur la figure 2. L'élément agitateur 12 s'étend, de préférence au-dessus du ou des bras radiaux 8, 8', 8", 8‴. L'élément agitateur 12 n'a donc pas de contact avec le fond 2' de la cuve 2 et son rôle est de faciliter la désagrégation, la circulation et la distribution du produit suite à un transport pendant lequel le produit s'est tassé dans la cuve. L'élément agitateur 12 présente avantageusement, à l'instar des organes 6, 6', une structure telle qu'il n'interagit que sur une surface limitée avec le produit présent dans la cuve 2 et qu'il se déplace dans cette dernière avec une perturbation spatialement limitée du produit présent. Préférentiellement, cet élément 12 dispose d'une forme semblable à un couteau à lame rectiligne radiale, à un couteau coudé ou toute autre forme pouvant décompacter ou aérer le produit à distribuer.

L'élément agitateur 12 peut être entraîné sélectivement en rotation, par exemple avec un assujettissement en rotation débrayable par rapport à l'arbre 7 ou par désolidarisation en rotation d'une portion supérieure dudit arbre 7 portant le ou les élément(s) agitateur(s).

Alors que la figure 2 illustre une variante de réalisation dans laquelle un seul organe mobile 6 est équipé d'un élément 12, la figure 1C illustre une autre variante dans laquelle chaque organe 6 et 6' comporte un tel élément 12.

En tout état de cause, dans toutes les variantes de réalisation de l'invention, les organes 6, 6' sont dépourvus de moyens spécifiques de mélange de produits.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole, automotrice ou sous forme de remorque à atteler, pour le transport et la distribution de produits en vrac, notamment destinés à l'alimentation animalière, ladite machine (1) comprenant une cuve, ou un réceptacle analogue (2), qui est montée sur un châssis roulant (3), qui comporte au moins une ouverture (4) obturable et située sensiblement à proximité ou au niveau du fond (2') de la cuve (2) et qui est équipée d'au moins un organe mobile (6, 6') effectuant le raclage dudit fond (2') et favorisant l'éjection du produit à travers ladite au moins une ouverture (4),
l'organe ou chaque organe mobile (6, 6') de raclage et d'éjection étant un organe monté rotatif autour d'un arbre ou axe vertical (7), perpendiculaire par rapport au plan du fond (2') et comprenant au moins deux bras radiaux (8, 8', 8", 8'") séparés, répartis autour de l'axe (7) et balayant, le cas échéant en coopération avec les bras (8, 8', 8", 8"') d'au moins un autre organe (6, 6'), sensiblement la totalité de la surface du fond (2'), l'épaisseur ou la hauteur (h) par rapport au fond (2') de chaque bras (8, 8', 8", 8'") étant inférieure à la hauteur (h') de l'ouverture (4) ou de chaque ouverture (4) latérale s'étendant depuis le fond (2') et devant laquelle ou lesquelles passe le bras (8, 8', 8", 8'") considéré lors de la rotation de l'organe mobile (6, 6') concerné,
la machine agricole (1), **caractérisée en ce que** chaque organe mobile (6, 6') comporte au moins trois, préférentiellement quatre, bras allongés (8, 8', 8", 8'"), mutuellement séparés et indépendants, et répartis de manière équidistante angulairement autour de l'axe ou de l'arbre (7) dudit organe (6, 6'),
**en ce que** chaque bras (8, 8', 8", 8‴) présente une section décroissante, continûment ou par paliers, depuis son extrémité (9') proximale de l'arbre (7), et raccordée à ce dernier, jusqu'à son extrémité distale libre (9),
et **en ce que** la hauteur (h) d'un bras décroît selon la direction centrifuge, sa valeur étant néanmoins toujours inférieure à la hauteur (h') de l'ouverture (4) associée, au moins dans sa région extrêmale.

2. Machine agricole selon la revendication 1, **caractérisée en ce que** chaque bras (8, 8', 8", 8'") est configuré et dimensionné de telle manière qu'il passe, avec son extrémité distale (9), à proximité immédiate d'au moins une ouverture (4) de la cuve (2) lors de la rotation de l'organe mobile de raclage et d'éjection (6, 6') auquel appartient ledit bras (8, 8', 8", 8‴).

3. Machine agricole selon l'une quelconque des revendications 1 et 2, **caractérisée en ce que** chaque bras (8, 8', 8", 8'") comporte deux segments longitudinaux contigus (10 et 10'), à savoir, un segment principal interne (10), de plus grande longueur, relié à l'arbre (7) et s'étendant radialement depuis ce dernier, et un segment secondaire externe (10') de plus faible longueur, s'étendant dans le prolongement du segment principal (10) et incliné vers l'arrière dans le sens de rotation (R) de l'organe mobile (6, 6') en fonctionnement normal, par rapport audit segment principal (10).

4. Machine agricole selon l'une quelconque des revendications 1 à 3, **caractérisée en ce que** la face latérale de chaque bras (8, 8', 8", 8'"), qui est située du côté frontal lors de la rotation de l'organe mobile (6, 6') considéré, est pourvue d'au moins un élément de raclage (11, 11'), préférentiellement monté de manière interchangeable.

5. Machine agricole selon les revendications 3 et 4, **caractérisée en ce que** chacun des deux segments (10 et 10') longitudinaux de chaque bras (8, 8', 8", 8'") comporte son propre élément de raclage (11 ou 11').

6. Machine agricole selon l'une quelconque des revendications 1 à 5, **caractérisée en ce que** chaque bras (8, 8', 8", 8'") présente une section transversale de forme triangulaire.

7. Machine agricole selon l'une quelconque des revendications 1 à 6, **caractérisée en ce qu'**au moins un organe mobile (6, 6') est associé à l'ouverture (4).

8. Machine agricole selon l'une quelconque des revendications 1 à 7, **caractérisée en ce qu'**au moins une ouverture (4) est associée à chaque organe mobile (6, 6').

9. Machine agricole selon l'une quelconque des revendications 1 à 8, **caractérisée en ce qu'**au moins un élément agitateur (12) est associé à au moins un organe mobile (6, 6').

## Patentansprüche

1. Landwirtschaftliche Maschine, selbstfahrend oder in der Form eines Anhängers zum Ankuppeln, für den Transport und die Verteilung von Losen Produkten, die insbesondere für die Tierfütterung bestimmt sind, wobei die Maschine (1) ein Behälter (2) oder desgleichen umfasst, der an einem Fahrgestell (3) angebracht ist, mindestens eine verschliessbare Öffnung (4) aufweist, die sich im Wesentlichen nahe des oder am Boden(s) (2') des Behälters befindet, und mit mindestens einem beweglichen Element (6, 6') ausgestattet ist, das den Boden (2') abschabt und den Auswurf des Produktes durch die mindestens eine Öffnung (4) begüngstigt,
wobei das oder jedes bewegliche Schab- und Auswurfelement (6, 6') ein Element, das drehbar um eine Welle oder eine Vertikalachse (7) montiert ist, die/der sich senkrecht bezüglich der Ebene des Bodens (2') erstreckt und mindestens zwei getrennte Radialarme (8, 8', 8", 8‴) aufweist, die um die Achse (7) aufgeteilt sind und, gegebenenfalls zusammen mit den Armen (8, 8', 8", 8‴) mindestens eines anderen Elements (6, 6'), im Wesentlichen die ganze Fläche des Bodens (2') abfegen, wobei die Dicke oder die Länge (h) jedes Arms (8, 8', 8", 8‴) bezüglich des Bodens (2') geringer als die Höhe (h') der seitlichen Öffnung (4) oder jeder seitlichen Öffnung (4) ist, die sich von dem Boden (2') aus erstreckt und vor welcher oder welchen der betreffende Arm (8, 8', 8", 8‴) während der Drehung des betreffenden beweglichen Elements (6, 6') vorbeiläuft,
die landwirtschaftliche Maschine (1) ist **dadurch gekennzeichnet, dass** jedes bewegliche Element (6, 6') mindestens drei, vorzgusweise vier Längsarme (8, 8', 8", 8‴) aufweist, die gegenseitig voneinander getrennt und unabhängig sind und winkelig gleichmässig um die Achse oder die Welle (7) des Elements (6, 6') aufgeteilt sind,
dass jeder Arm (8, 8', 8", 8‴) einen kontinuierlichen oder stufenweisen abnehmenden Abschnitt, von seinem Proximalende (9') der Welle (7), an welche er verbunden ist, bis zu seinem freien Distalende (9) aufweist,
und dass die Höhe (h) eines Arms gemäss der Zentrifugalrichtung abnimmt, wobei sein Wert dennoch immer geringer als die Höhe (h') der damit verbundene Öffnung, zumindest in seinem Extrembereich, ist.

2. Landwirtschaftliche Maschine nach Anspruch 1, **dadurch gekennzeichnet, dass** jeder Arm (8, 8', 8", 8‴) derart konfiguriert und dimensioniert ist, dass er, zusammen mit seinem Distalende (9), während der Drehung des beweglichen Schab- und Auswurfelements (6, 6') zu welchem der Arm (8, 8', 8", 8‴) gehört, in der unmittelbaren Nähe mindestens einer Öffnung (4) des Behälters (2) verläuft.

3. Landwirtschaftliche Maschine nach irgend einem der Ansprüche 1 und 2, **dadurch gekennzeichnet, dass** jeder Arm (8, 8', 8", 8‴) zwei angrenzende Längsabschnitte (10 und 10') aufweist, nämlich ein innerer Hauptabschnitt (10), von grösserer Länge, der mit der Welle (7) verbunden ist und sich radial von dieser letzeren aus erstreckt, und ein äusserer Nebenabschnitt (10') von kürzerer Länge, der sich in der Verlängerung des Hauptabschnitts (10) erstreckt und bezüglich des Hauptabschnitts (10) bei normalem Betrieb nach hinten in die Drehrichtung (R) des beweglichen Elements (6, 6') geneigt ist.

4. Landwirtschaftliche Maschine nach irgend einem der Ansprüche 1 bis 3, **dadurch gekennzeichnet, dass** die Seitenfläche jedes Arms (8, 8', 8", 8‴), die sich während der Drehung des betreffenden beweglichen Elements (6, 6') auf der Vorderseite befindet, mit mindestens einem Schabelement (11, 11') versehen ist, das vorzugsweise austauschbar montiert ist.

5. Landwirtschaftliche Maschine nach den Ansprüchen 3 und 4, **dadurch gekennzeichnet, dass** jeder der beiden Längsabschnitte (10 und 10') jedes Arms (8, 8', 8", 8‴) sein eigenes Schabelement (11 oder 11') aufweist.

6. Landwirtschaftliche Maschine nach irgend einem der Ansprüche 1 bis 5, **dadurch gekennzeichnet**, das jeder Arm (8, 8', 8", 8‴) einen dreieckförmigen Querschnitt hat.

7. Landwirtschaftliche Maschine nach irgend einem der Ansprüche 1 bis 6, **dadurch gekennzeichnet, dass** mindestens ein bewegliches Element (6, 6') mit der Öffnung (4) verbunden ist.

8. Landwirtschaftliche Maschine nach irgend einem der Ansprüche 1 bis 7, **dadurch gekennzeichnet, dass** mindestens eine Öffnung (4) mit jedem beweglichen Element (6, 6') verbunden ist.

9. Landwirtschaftliche Maschine nach irgend einem der Ansprüche 1 bis 8, **dadurch gekennzeichnet, dass** mindestens ein Mischelement (12) mit mindestens einem beweglichen Element (6, 6') verbunden ist.

## Claims

1. Agricultural machine, which is self-propelled or in the form of a hitchable trailer, for the transport and distribution of a bulk product, in particular intended for animal feeding, the said machine (1) comprising a tank or similar container (2), which is mounted on a rolling chassis (3) with at least one sealable opening (4) situated substantially close to or at the level of the bottom (2') of the tank (2) and is fitted with at least one mobile element (6, 6') performing scraping of the said bottom (2') and promoting product ejection through the said at least one opening (4),
the or each mobile scraping and ejection element (6, 6') being an element rotary mounted around a vertical shaft or axis (7), perpendicular relative to the plane of the bottom (2') and comprising at least two separate radial arms (8, 8', 8", 8‴), distributed around the axis (7) and sweeping over, where appropriate in cooperation with the arms (8, 8', 8", 8‴) of at least one other element (6, 6'), substantially the entire surface of the bottom (2'), the thickness or the height (h) of each arm (8, 8', 8", 8‴) relative to the bottom (2') being less than the height (h') of the side opening (4) or of each side opening (4) extending from the bottom (2') and in front of which the arm (8, 8', 8", 8‴) in question passes during the rotation of the mobile element (6, 6') concerned,
the agricultural machine (1) is **characterized in that** each mobile element (6, 6') comprises at least three, preferably four, elongated arms (8, 8', 8", 8‴), mutually spaced apart from each other and independent, and distributed in angularly equidistant manner around the axis or the shaft (7) of the said element (6, 6'),
**in that** each arm (8, 8', 8", 8‴) has a section with decreases continuously or in steps, from its proximal end (9') of the shaft (7), to which it is connected, to its free distal end (9),
and **in that** the height (h) of an arm decreases according to the centrifugal direction, its value being nevertheless always less than the height (h') of the associated opening (4), at least in its end region.

2. Agricultural machine according to Claim 1, **characterized in that** each arm (8, 8', 8", 8‴) is configured and sized in such a way that it passes, with its distal end (9), in the immediate vicinity of at least one opening (4) of the tank (2) during the rotation of the mobile scraping and ejection element (6, 6') to which the said arm (8, 8', 8", 8‴) belongs.

3. Agricultural machine according to any one of claims 1 and 2, **characterized in that** each arm (8, 8', 8", 8‴) comprises two contiguous longitudinal segments (10 and 10'), i.e. an inner main segment (10) of greater length, connected to the shaft (7) and extending radially from the latter, and an outer secondary segment (10') of shorter length extending in the prolongation of the main segment (10) and inclined rearwards in the direction of rotation (R) of the mobile element (6, 6') in normal operation relative to the said main segment (10).

4. Agricultural machine according to any one of claims 1 to 3, **characterized in that** the side face of each arm (8, 8', 8", 8'"), which is located on the front side during the rotation of the mobile element (6, 6') in question is fitted with at least one scraping element (11, 11'), preferably mounted in an interchangeable manner.

5. Agricultural machine according to claims 3 and 4, **characterized in that** each of the two longitudinal segments (10 and 10') of each arm (8, 8', 8", 8‴) comprises its own scraping element (11 or 11').

6. Agricultural machine according to any one of claims 1 to 5, **characterized in that** each arm (8, 8', 8", 8‴) has a cross section of triangular shape.

7. Agricultural machine according to any one of claims 1 to 6, **characterized in that** at least one mobile element (6, 6') is associated with the opening (4).

8. Agricultural machine according to any one of claims 1 to 7, **characterized in that** at least one opening (4) is associated with each mobile element (6, 6').

9. Agricultural machine according to any one of claims 1 to 8, **characterized in that** at least one agitator element (12) is associated with at least one mobile element (6, 6').
